# DEMANDE DE BREVET EUROPEEN

(11) **EP 4 280 264 A1**
(43) Date de publication de la demande: **22.11.2023**
(21) Numéro de dépôt: 23173322.1
(22) Date de dépôt: 15.05.2023
(51) Int. Cl.: H01L 21/768, H01L 23/528, H01L 23/522, H01L 23/00, G06F 21/73

(54) **PROCÉDÉ DE RÉALISATION D'UNE ZONE D'INDIVIDUALISATION D'UN CIRCUIT INTÉGRÉ**

(30) Priorité: 18.05.2022 FR 2204727
(71) Demandeur: Commissariat à l'énergie atomique et aux énergies alternatives, 75015 Paris (FR)
(72) Inventeur: LANDIS, Stefan, 38054 GRENOBLE Cedex 09 (FR); EXBRAYAT, Yorrick, 38054 GRENOBLE Cedex 09 (FR)
(74) Mandataire: Hautier IP

(57) **Abrégé**

L'invention porte sur un procédé de réalisation d'une zone d'individualisation d'une puce microélectronique comprenant un premier (10A) et un deuxième (20A) niveaux de pistes électriques (10, 20), et un niveau (30A) d'interconnexions comportant des vias (30), le procédé comprenant les étapes suivantes :
• fournir le premier niveau (10A) et une couche diélectrique (200),
• former sur la couche diélectrique (200) un masque de gravure (300) comprenant des ouvertures (301),
• déposer de façon aléatoire des particules (P) dans les ouvertures (301), par dépôt puis brassages desdites particules à la surface du masque de gravure (300),
• graver la couche diélectrique (200) au travers des ouvertures de masque (301), de façon à obtenir des ouvertures de via (320) fonctionnelles et des ouvertures de via dégradées (320F),
• remplir les ouvertures de via (320, 320F) de sorte à former les vias (30) du niveau (30A) d'interconnexions, lesdits vias (30) comprenant des vias fonctionnels (30OK) au niveau des ouvertures fonctionnelles (320) et des vias dysfonctionnels (30KO) au niveau des ouvertures dégradées (320F).

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias différent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

D'autres solutions consistent à dégrader volontairement et aléatoirement les vias d'un niveau d'interconnexions. Le document US 2014/042627 A1 divulgue un procédé dans lequel certaines ouvertures du masque de gravure permettant de former les vias sont partiellement bouchées par des particules issues d'un polymère diblocs.

Ce procédé ne permet cependant pas de boucher de façon satisfaisante les ouvertures du masque de gravure.

Un objet de la présente invention consiste donc à dépasser les limitations des solutions connues.

En particulier, un objet de la présente invention est de proposer un procédé de réalisation d'une zone d'individualisation qui soit efficace et qui présente un caractère aléatoire.

### RESUME

Pour atteindre cet objectif, selon un mode de réalisation on prévoit un procédé de réalisation d'une zone d'individualisation d'une puce microélectronique, ladite puce comprenant au moins :
- un premier et un deuxième niveaux de pistes électriques,
- un niveau d'interconnexions situées entre les premiers et deuxième niveaux de pistes électriques et comportant des vias destinés à connecter électriquement des pistes électriques du premier niveau avec des pistes électriques du deuxième niveau.

La puce présente au moins une autre zone, distincte de la zone d'individualisation, destinée à former une zone fonctionnelle de la puce.

Le procédé comprend au moins les étapes suivantes effectuées au niveau de la zone d'individualisation de la puce :
- fournir au moins le premier niveau de pistes électriques et au moins une couche diélectrique recouvrant le premier niveau,
- former sur l'au moins une couche diélectrique un masque de gravure présentant des ouvertures de masque situées au moins en partie au droit des pistes électriques et rendant accessible l'au moins une couche diélectrique,
- déposer aléatoirement des particules sur une face exposée du masque de gravure, puis
- appliquer un tampon de brassage sur ladite face exposée pour que le tampon de brassage déplace les particules sur la face exposée de sorte à ce que certaines desdites particules bouchent au moins partiellement certaines des ouvertures de masque, dites ouvertures bouchées, en laissant d'autres ouvertures de masque sans particules, dites ouvertures débouchantes,
- graver l'au moins une couche diélectrique au travers des ouvertures de masque, de façon à former des ouvertures de vias débouchant sur le premier niveau des pistes électriques, comprenant des ouvertures de vias fonctionnelles au droit des ouvertures de masque débouchantes, et des ouvertures de vias dégradées au droit des ouvertures de masque bouchées,
- remplir les ouvertures de vias avec un matériau électriquement conducteur de sorte à former au moins les vias du niveau d'interconnexions, lesdits vias comprenant des vias fonctionnels au niveau des ouvertures de vias fonctionnelles et des vias dysfonctionnels au niveau des ouvertures de vias dégradées.

Le procédé comprend en outre, préalablement au dépôt des particules dans la zone d'individualisation, une formation d'un masque de protection sur la zone destinée à former la zone fonctionnelle de la puce.

Ainsi, les particules déplacées par le tampon bouchent aléatoirement certaines des ouvertures du masque et empêchent que certaines ouvertures de vias soient correctement formées. Ces ouvertures de vias dégradées sont typiquement soit totalement bouchées soit partiellement bouchées. Le matériau électriquement conducteur ne peut plus être correctement déposé dans ces ouvertures de vias dégradées. Les particules déposées après formation du masque de gravure conduisent *in fine* à la formation de vias dysfonctionnels, qui peuvent être inactifs - c'est-à-dire sans conduction électrique - ou dégradés - c'est-à-dire avec une conduction électrique très inférieure à une conduction nominale d'un via fonctionnel.

Le procédé proposé permet donc de dégrader volontairement mais aléatoirement le niveau d'interconnexions. Cette dégradation volontaire permet de créer des vias dysfonctionnels répartis de façon aléatoire au sein de la zone d'individualisation de la puce. Le diagramme de réponse de la puce ou du circuit intégré sera donc intimement lié au caractère aléatoire de la répartition des vias dysfonctionnels. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique. Le caractère aléatoire ou le désordre sur les positions des particules, obtenu à l'issue du dépôt et du brassage des particules, est supérieur à celui obtenu à partir d'un copolymère diblocs comme divulgué par le document US 2014/042627 A1, puisqu'un copolymère diblocs présente nécessairement intrinsèquement un certain ordre.

De manière particulièrement avantageuse, il a été constaté que le procédé proposé permet d'aboutir à ce que le caractère aléatoire de la répartition des vias inactivés soit homogène ou sensiblement homogène sur toute la surface d'une plaque portant des zones d'individualisation. Ainsi une zone d'individualisation située au bord d'une plaque bénéficiera d'un caractère aléatoire de même ampleur qu'une zone d'individualisation située au centre de cette même plaque.

Par ailleurs, le dépôt aléatoire de particules, par exemple à partir d'une solution colloïdale, et l'application d'un tampon de brassage déplaçant lesdites particules sont des étapes courantes des technologies de la microélectronique. Ces étapes peuvent par exemple correspondre à la mise en oeuvre au moins partielle d'un procédé de polissage mécano-chimique CMP (acronyme de « Chemical Mechanical Polishing »), bien connu et largement utilisé dans les technologies de la microélectronique. Cela permet d'éviter des coûts de développement liés à de nouveaux procédés. Les coûts de mise en oeuvre de ce procédé d'individualisation sont ainsi réduits.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en oeuvre et à un cout réduit, afin de réaliser une zone d'individualisation d'un circuit intégré.

Un autre aspect concerne un procédé de réalisation d'un dispositif microélectronique comportant au moins un circuit intégré, le circuit intégré comportant au moins :
- un premier et un deuxième niveaux des pistes électriques,
- un niveau d'interconnexions situées entre les premiers et deuxième niveaux des pistes électriques et comportant des via destinées à connecter électriquement des pistes du premier niveau avec des pistes du deuxième niveau
- une zone d'individualisation du circuit intégré.

La zone d'individualisation est réalisée en mettant en oeuvre le procédé décrit précédemment, de préférence sur une partie seulement du circuit intégré.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
Les figures nA (n=1 ... 15, n#7) illustrent schématiquement en coupe transverse des étapes d'un mode de réalisation d'une zone d'individualisation d'un circuit intégré selon la présente invention.

Les figures nB (n=1... 15, n#7) illustrent schématiquement en vue de dessus les étapes illustrées aux figures nA correspondantes.

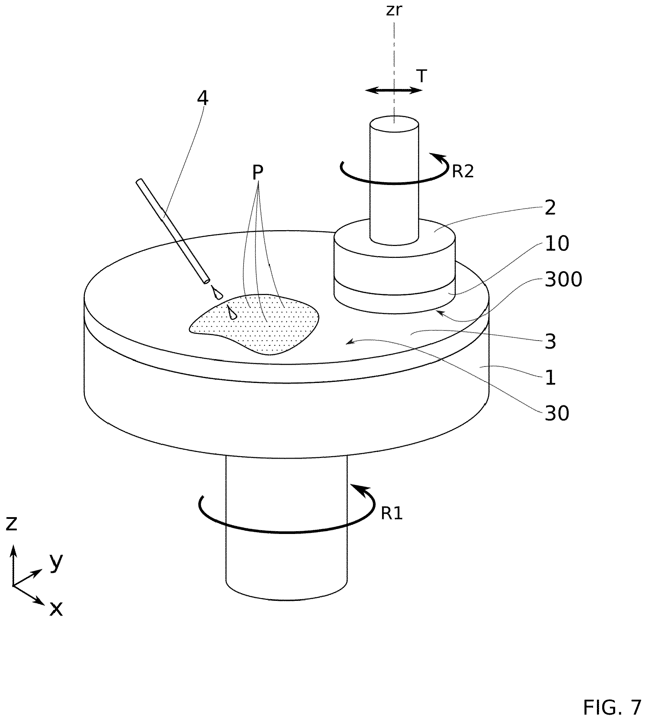

La figure 7 illustre schématiquement un équipement de CMP permettant la mise en oeuvre du procédé de réalisation d'une zone d'individualisation d'un circuit intégré selon un mode de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias, motifs et reliefs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, le dépôt aléatoire des particules se fait par dispersion d'une solution contenant lesdites particules en suspension.

Selon un exemple, l'application du tampon de brassage sur la face exposée comprend au moins un mouvement relatif de rotation dudit tampon autour d'un axe normal à la face exposée.

Ainsi, au moins l'un parmi le tampon de brassage et la face exposée du masque de gravure est déplacé par rapport à l'autre parmi le tampon de brassage et cette face exposée. Selon un mode de réalisation, le tampon de brassage est déplacé et la face exposée est fixe par exemple par rapport à un bâti de l'équipement supportant la face exposée. Selon un mode de réalisation alternatif, le tampon de brassage est fixe et la face exposée est déplacée. Alternativement le tampon de brassage et la face exposée sont tous les deux déplacées.

Selon un exemple ce déplacement peut comprendre deux rotations autour d'axes coaxiaux ou non co-axiaux mais parallèles.

Selon un exemple ce déplacement comprend au moins une rotation ou au moins une translation. Selon un exemple l'application du tampon de brassage sur la face exposée comprend, de préférence simultanément, au moins un mouvement de rotation relatif dudit tampon par rapport à la face exposée autour d'un axe normal à la face exposée du masque de gravure et au moins une translation dudit axe de rotation dans un plan parallèle à la face exposée du masque de gravure.

Selon un exemple ledit mouvement est en partie au moins aléatoire. Par exemple la vitesse et/ou la trajectoire du déplacement sont aléatoires.

Selon un exemple, le dépôt aléatoire des particules suivi par l'application du tampon de brassage correspond à une étape d'un procédé de polissage mécano-chimique.

Selon un exemple, le masque de gravure présente une épaisseur initiale e, avant l'étape de polissage mécano-chimique, et l'étape de polissage mécano-chimique est configurée de façon à ce que le masque de gravure présente, après ladite étape de polissage mécano-chimique, une épaisseur finale e', telle que e' ≥ 0,9.e, de préférence e' ≥ 0,95.e et de préférence e' ≥ 0,98.e.

Selon un exemple, les particules présentent chacune au moins une dimension supérieure ou égale à un diamètre des ouvertures de masque. Cela permet d'augmenter la probabilité qu'une particule bouche totalement une ouverture de masque. Cela permet d'obtenir un via inactif sans conduction électrique.

Selon un exemple, les particules présentent une dimension minimale L supérieure à 20 nm et de préférence supérieure à 70 nm. Cette dimension minimale L correspond typiquement à la dimension critique CDᵥᵢₐ du via. Cette dimension critique est par exemple le diamètre du via, pris selon une coupe parallèle aux différents niveaux des pistes électriques intégrées. Une dimension L en adéquation avec la dimension critique CDᵥᵢₐ permet d'augmenter la probabilité qu'une particule bouche totalement une ouverture de masque. Cela permet d'obtenir un via inactif sans conduction électrique. Cela évite de recourir ultérieurement à une étape supplémentaire d'inactivation, qui est généralement mise en oeuvre lorsque le via dysfonctionnel considéré présente une faible conduction électrique.

Selon un exemple, les particules sont des billes ou des rouleaux.

Selon un exemple, l'au moins une couche diélectrique comprend une couche à base de SiOCH dense ou poreux (p-SiOCH), ou à base de SiOz.

Selon un exemple, les particules sont minérales, de préférence à base d'oxyde de silicium.

Selon un exemple, la gravure de l'au moins une couche diélectrique se fait par gravure sèche anisotrope, selon une direction normale à la face exposée.

Selon un exemple, les particules présentent une sélectivité de gravure S_{P:HM} vis-à-vis du masque de gravure, lors de la gravure de l'au moins une couche diélectrique, inférieure ou égale à 1:1. Cela permet de conserver en partie la particule lors de la gravure de la couche diélectrique. L'ouverture de masque dégradée reste ainsi bouchée suffisamment longtemps. La gravure de la couche diélectrique est limitée ou évitée.

Selon un exemple, plusieurs vias sont associés à une même piste électrique du deuxième niveau et à une même piste électrique du premier niveau. Cela permet d'avoir un taux de conductivité nominale entre ces pistes qui soit fonction du taux de vias dysfonctionnels ou inactifs.

Selon un exemple, la puce présente au moins une autre zone, distincte de la zone d'individualisation, destinée à former une zone fonctionnelle de la puce. Selon un exemple, un masque de protection est formé sur ladite zone destinée à former la zone fonctionnelle, préalablement au dépôt des particules dans la zone d'individualisation.

La réalisation des vias dysfonctionnels aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. Le premier et le deuxième niveaux de pistes électriques ainsi que le niveau d'interconnexion s'étendent dans ladite au moins une autre zone. La zone fonctionnelle est destinée à assurer des fonctions logiques pour le fonctionnement attendu du circuit intégré. Les pistes électriques et les vias de cette zone fonctionnelle sont typiquement sans défaut. Outre les pistes électriques, cette zone fonctionnelle peut comprendre des structures micro-électronique, tel que par exemple des transistors, des diodes, des MEMS etc. La zone fonctionnelle est réalisée de façon standard, avec les procédés bien connus de l'homme du métier. Dans la suite, seule la zone d'individualisation et son procédé de fabrication sont illustrés et détaillés.

Dans le cadre de la présente invention, une zone d'individualisation dite PUF est parfaitement différenciée d'une telle zone fonctionnelle, par exemple destinée à effectuer des opérations logiques. La zone d'individualisation a quant à elle principalement et de préférence uniquement comme fonction de permettre l'identification unique de la puce et donc l'authentification de la puce. À cet effet, et comme cela sera détaillé par la suite, lors du procédé de fabrication, on prévoit de dégrader aléatoirement le niveau d'interconnexions de façon à obtenir des vias dysfonctionnels ou inactifs. Plus précisément, on prévoit de créer de manière aléatoire des défauts au niveau de certains vias, de façon à rendre dysfonctionnels ou inactifs ces vias.

Un diagramme de réponse du circuit intégré est obtenu en appliquant une routine de test électrique ou logique aux entrées (pistes du premier niveau par exemple) de la zone d'individualisation, puis en mesurant l'état électrique ou logique en sortie (pistes du deuxième niveau pour ce même exemple) de la zone d'individualisation. Le principe est que l'on dispose pour chaque circuit intégré d'une zone d'individualisation comprenant un réseau unique de vias fonctionnels et de vias dysfonctionnels. La réponse de chaque circuit intégré sera donc différente. Chaque circuit intégré pourra donc être identifié de manière unique. La zone d'individualisation peut être qualifiée de zone PUF et la zone fonctionnelle peut être qualifiée de zone non-PUF.

Selon l'invention, le diagramme de réponse du circuit intégré dépend du nombre et de la position des vias dysfonctionnels ou inactifs dans la zone d'individualisation.

La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

Un niveau d'interconnexions comprend des portions conductrices généralement qualifiées de vias, qui sont destinées à connecter des pistes d'un premier niveau avec des pistes d'un deuxième niveau. Les différents niveaux de pistes électriques et d'interconnexion sont en outre généralement isolés des autres éléments du circuit intégré par au moins une couche diélectrique. On notera que des vias peuvent connecter des pistes de deux niveaux qui ne sont pas directement successifs mais qui sont eux même séparés par un ou plusieurs autres niveaux.

Selon l'invention, les vias fonctionnels présentent une conduction électrique nominale, qui est généralement définie par le dimensionnement des vias. Les vias dysfonctionnels comprennent des vias inactifs et des vias dégradés. Les vias inactifs ne présentent pas de conduction électrique. Les vias dégradés présentent typiquement une conduction électrique très inférieure à la conduction électrique nominale des vias fonctionnels, typiquement au moins dix fois inférieure à la conduction électrique nominale. La conduction électrique des vias dégradés peut également évoluer dans le temps. Un via dégradé peut devenir un via inactif, par exemple par claquage. Selon une possibilité préférée, les vias dégradés sont désactivés de manière à former uniquement des vias inactifs.

Le procédé est typiquement mis en oeuvre dans les étapes de fabrication de « fin de ligne », dites BEOL (acronyme de Back End Of Line), correspondant à la réalisation des niveaux d'interconnections électriques.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

Dans la présente demande, les termes « puce » et « circuit intégré » sont employés en synonymes.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement selon un plan. De préférence les vias forment chacun un plot ou un cylindre, de section sensiblement circulaire, et orienté perpendiculairement aux plans des niveaux de pistes électriques.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

Plusieurs modes de réalisation de l'invention mettant en oeuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B. Elle est de préférence notée S_{A:B}. Une sélectivité S_{A:B} égale à 5:1 signifie que le matériau A est gravé 5 fois plus vite que le matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl méthacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Des couches et/ou des revêtements antireflets peuvent être associés aux résines. Cela permet notamment d'améliorer la résolution de lithographie. Dans la suite, les différents masques à base de résine sont de préférence associés à de telles couches antireflets.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

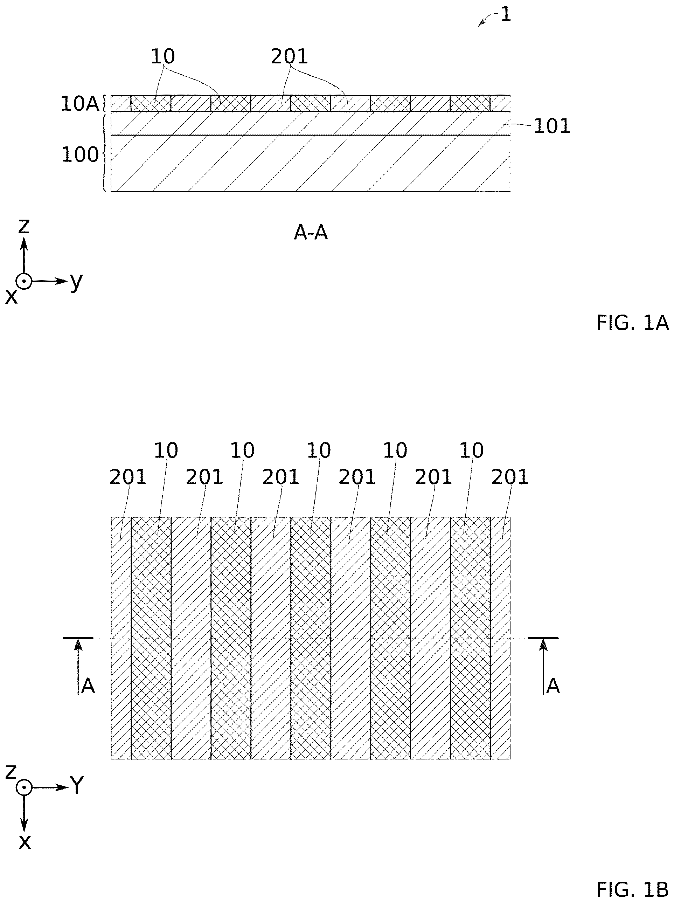

Les figures 1A et 1B illustrent de manière schématique la formation d'un premier niveau 10A de pistes électriques 10 sur un substrat 100, dans la zone d'individualisation 1. Le substrat 100 peut typiquement être à base de silicium et comporter des composants élémentaires, par exemple des transistors, sur un niveau 101 de « début de ligne », dit FEOL (acronyme de « Front End Of Line »).

Le niveau 10A s'étend principalement selon un plan xy. Le premier niveau de pistes 10A comprend des pistes électriques 10. Ces pistes électriques 10 sont formées dans un matériau conducteur tel que le cuivre ; ces pistes électriques 10 sont typiquement séparées et/ou encapsulées par une couche diélectrique 201. Cette couche diélectrique a également pour fonction de former une barrière contre la diffusion du cuivre. Cette couche diélectrique 201 est par exemple formée de SiOz.

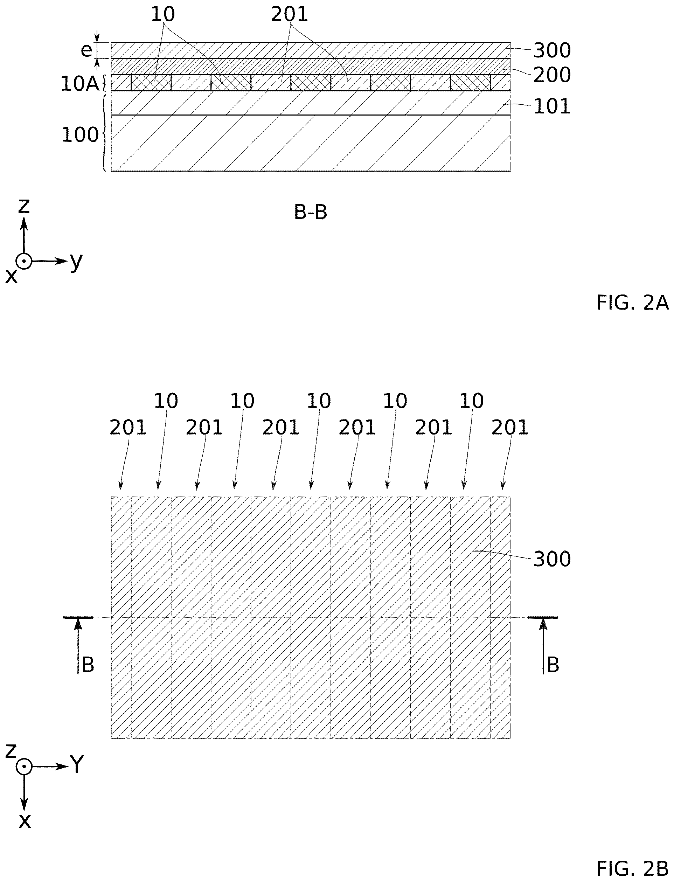

Les figures 2A et 2B illustrent la formation d'une couche diélectrique 200 et d'un masque de gravure 300 en empilement selon z sur le premier niveau de pistes 10A, en prévision de la formation du niveau d'interconnexion 30A.

La couche diélectrique 200 est de préférence directement au contact du premier niveau 10A. Elle est à base d'un matériau diélectrique, par exemple à base d'un oxyde de silicium ou d'un nitrure de silicium, ou encore d'un oxy-nitrure de silicium. Elle peut être à base de SiO₂, de SiOCH, de SiₓN_{y}, de SiCN, de SiOₓN_{y} ou de SiOₓC_{y}N_{z} avec x, y, z des nombres rationnels positifs non nuls.

Cette couche diélectrique 200 peut être déposée par dépôt chimique en phase vapeur (CVD), par exemple par dépôt chimique en phase vapeur assisté par plasma (PECVD, acronyme de « Plasma Enhanced Chemical Vapor Déposition ») ou par dépôt chimique en phase à basse pression (LPCVD, acronyme de « Low Pressure Chemical Vapor Déposition »).

La couche diélectrique 200 peut présenter une épaisseur typiquement comprise entre 20 nm et 1000 nm, de préférence entre 50 nm et 500 nm, par exemple de l'ordre de 100 nm.

Le masque de gravure 300 est formé sur la couche diélectrique 200. Il est choisi de préférence en un matériau A présentant une sélectivité de gravure importante vis-à-vis de du matériau diélectrique, pour une gravure HF vapeur. La sélectivité de gravure S diéiec:A entre le matériau diélectrique et le matériau A est de préférence supérieure ou égale à 10:1. Pour une couche diélectrique 200 à base de SiO2, le masque de gravure 300 peut être à base de SiN ou de TiN. Pour une couche diélectrique 200 à base de SiN, le masque de gravure 300 peut être à base de Si. Le masque de gravure 300 peut présenter une épaisseur initiale e comprise entre 20 nm et 1000 nm, de préférence entre 50 nm et 300 nm. L'épaisseur initiale e pourra notamment être déterminée en fonction de la sélectivité de gravure entre les matériaux du masque de gravure et de la couche diélectrique.

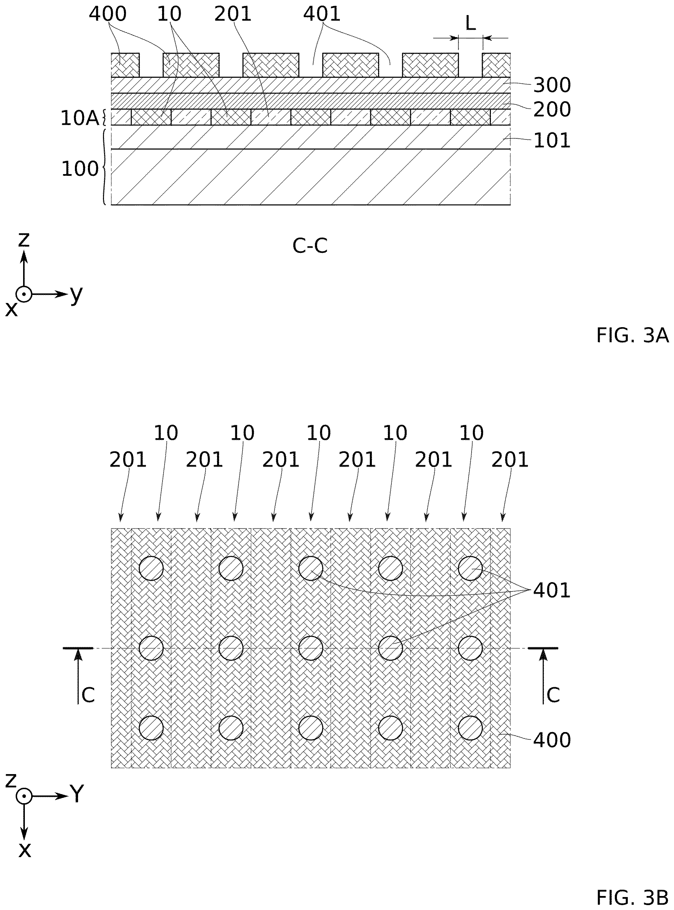

Comme illustré aux figures 3A, 3B, un masque 400 à base de résine comprenant des ouvertures 401 formant des motifs de vias est déposé sur le masque de gravure 300. Ces ouvertures 401 du masque 400 servent notamment à ouvrir le masque de gravure 300. Les ouvertures 401 sont situées au moins en partie au droit des pistes électriques 10. Les ouvertures 401 présentent une dimension latérale L, typiquement un diamètre, comprise entre 20 nm et 1000 nm.

En fonction de la technique mise en oeuvre pour ouvrir le masque 300, le masque 400 peut être formé d'une ou plusieurs couches. Il peut être à base de résine photosensible, par exemple à tonalité positive. Un revêtement antireflets sous-jacent de type BARC (Bottom Anti Reflective Coating signifiant revêtement anti-réflexion de fond) est de préférence intercalé entre le masque 300 et le masque 400. Le masque 400 en résine photosensible peut présenter une épaisseur comprise entre 50 nm et 300 nm. Cette épaisseur peut être ajustée par exemple suivant le niveau de pistes considéré dans l'empilement et par conséquent la résolution des vias. Le revêtement antireflets peut présenter une épaisseur comprise entre 25 nm et 35 nm, par exemple de l'ordre de 30 nm.

Alternativement, le masque 400 peut comprendre deux couches de type SOC (spin on carbon) et SiARC (pour « silicon anti reflective coating » signifiant revêtement anti réflexion à base de silicium), ainsi qu'une couche de résine photosensible (masque dit « Tri Layer »). Les épaisseurs de ces trois couches varient selon la nature des couches et selon les dimensions des vias visées. Elles sont typiquement de l'ordre de 150 nm pour le SOC, 30 nm pour le SiARC et environ 100 nm pour la résine.

Les différentes couches de ce masque 400 peuvent être déposées par une méthode classique de spin coating (à la tournette).

Les ouvertures 401 du masque 400 sont réalisées en mettant en oeuvre des techniques classiques de lithographie, telles que la lithographie optique, la lithographie électronique par faisceau d'électrons (e-beam), la lithographie par nanoimpression ou toute autre technique de lithographie connue de l'homme du métier.

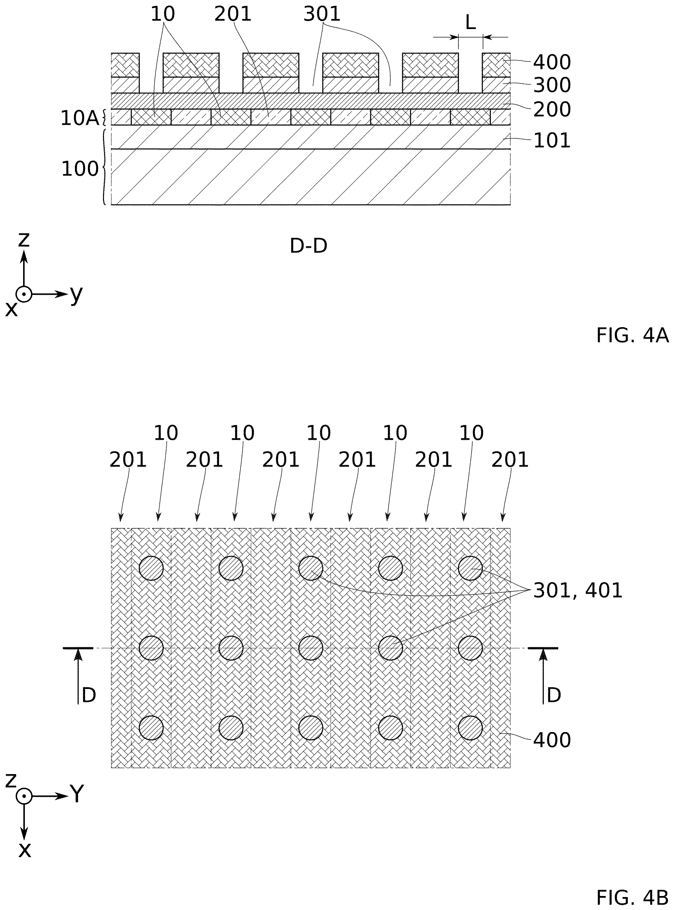

Comme illustré aux figures 4A, 4B, une gravure est effectuée dans le masque de gravure 300 pour y transférer les motifs 401 du masque 400. Cette gravure est configurée pour former les ouvertures de masque 301.

Le revêtement antireflets et le masque de gravure 300 peuvent être gravés par plasma, à l'aide d'une chimie de gravure à base de chlore, par exemple Cl2 /BCl3. Ce type de plasma permet d'utiliser un masque 400 à base de résine présentant une fine épaisseur, par exemple inférieure à 200 nm.

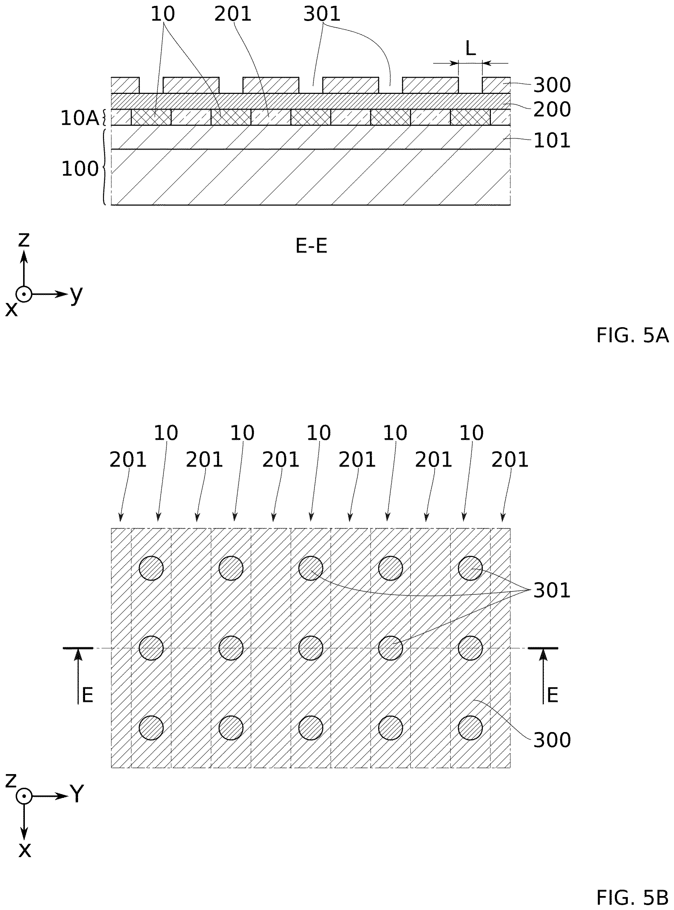

Comme illustré aux figures 5A, 5B, le masque 400 est de préférence retiré après ouverture du masque de gravure 300. Ce retrait peut se faire classiquement par une étape dite de « stripping », par exemple par plasma à base d'oxygène.

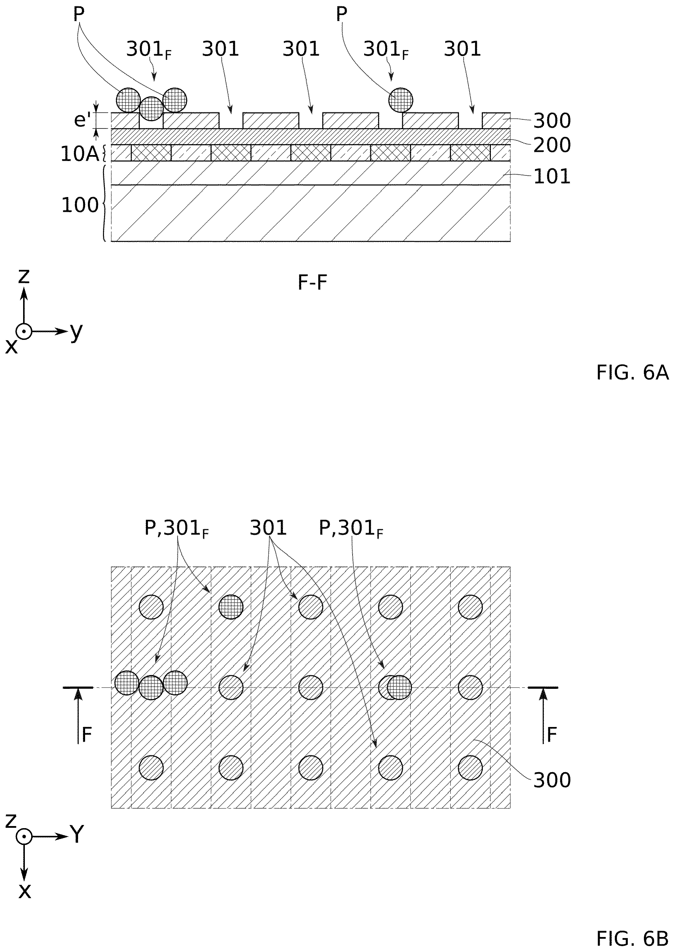

Comme illustré aux figures 6A, 6B, et à la figure 7, des particules P sont ensuite déposées aléatoirement au niveau des ouvertures de masque 301. Ces particules P peuvent ainsi boucher partiellement ou totalement les ouvertures de masque 301. Un masque de gravure 300 comprenant des ouvertures 301 débouchantes, dépourvues de particules P, et des ouvertures 301_{F} bouchées, obstruées au moins en partie par des particules P, est ainsi obtenu. Le dépôt des particules P peut se faire par dispersion d'une solution colloïdale comprenant lesdites particules P en suspension, sur la surface exposée du masque de gravure 300. Dans une telle solution colloïdale, les particules P sont animées par un mouvement brownien qui assure une distribution aléatoire des positions de particules au sein de la solution, avant dépôt. Lors du dépôt sur la surface exposée du masque de gravure 300, ce caractère aléatoire sur les positions de particules est conservé. À ce stade, les particules P se répartissent donc aléatoirement à la surface du masque de gravure 300. Le dépôt des particules P peut se faire sur une surface intermédiaire, typiquement une surface 30 d'un tampon 3 de polissage ou de brassage, mise en contact avec la face exposée du masque de gravure 300, comme illustré à la figure 7. La dispersion peut se faire dans ce cas sur la surface intermédiaire 30, par exemple via une canule 4. Le caractère aléatoire sur les positions de particules est conservé lors de la mise en contact de la surface intermédiaire 30 avec la surface exposée du masque de gravure 300.

Un brassage des particules P à la surface du masque de gravure 300 est ensuite effectué. Ce brassage est typiquement effectué par application d'un tampon de brassage au contact des particules P et de la surface du masque de gravure 300. Ainsi, au moins l'un parmi le tampon de brassage et la face exposée du masque de gravure 300 est déplacé par rapport à l'autre parmi le tampon de brassage et cette face exposée. Selon un mode de réalisation, le tampon de brassage est déplacé et la face exposée est fixe par exemple par rapport à un bâti de l'équipement supportant la face exposée. Selon un mode de réalisation alternatif, le tampon de brassage est fixe et la face exposée est déplacée. Alternativement le tampon de brassage et la face exposée sont tous les deux déplacés.

Selon un exemple ce déplacement comprend au moins une rotation R1, R2 et/ou au moins une translation T. De préférence ce déplacement comprend simultanément au moins une rotation R2 autour d'un axe zr selon z et une translation T dans un plan xy perpendiculaire à cet axe zr. Le déplacement peut comprendre au moins deux mouvements de rotation R1, R2. Par exemple, la face exposée peut être mise en rotation selon une rotation R2 autour d'un axe correspondant sensiblement au centre de la face. Le tampon 3 de brassage peut être mis en rotation selon une rotation R1 autour d'un axe décalé vis-à-vis du centre de la face. Le tampon 3 de brassage et la face exposée du masque de gravure 300 peuvent être mis en rotation selon des première et deuxième rotations R1, R2 de même sens ou contrarotatives. Le mouvement relatif du tampon 3 de brassage et de la face exposée peut donc comprendre une ou plusieurs rotations, et éventuellement une ou plusieurs translations.

Dans la suite de la description, par souci de concision il est indiqué que c'est le tampon de brassage qui est mobile. Tous les modes de réalisation ci-dessous sont combinables avec des déplacements de la face exposée.

Ainsi selon un exemple, le tampon de brassage peut être animé par un mouvement de rotation et/ou de translation permettant de déplacer au moins certaines particules P à la surface du masque de gravure 300. Ainsi, des particules P dont les positions initiales étaient situées sur le masque de gravure 300, en dehors des ouvertures 301, peuvent être déplacées au niveau de certaines ouvertures 301_{F} de façon à obstruer au moins partiellement ces ouvertures 301_{F}. Corollairement, des particules P dont les positions initiales étaient situées sur le masque de gravure 300, au niveau de certaines ouvertures 301_{F}, peuvent être déplacées en dehors de ces ouvertures de façon à obtenir des ouvertures 301 débouchantes. Cette étape de brassage permet ainsi de modifier les positions initiales des particules P sur la face exposée du masque de gravure 300 et dans les ouvertures 301. Le caractère aléatoire de la répartition des particules P dans et en dehors des ouvertures 301, 301_{F}, est ainsi renforcé. Selon une possibilité, les particules P sont déposées par dispersion sur le tampon de brassage, puis mises en contact avec la face exposée du masque de gravure 300 lors de l'application du tampon de brassage sur ladite face exposée. Dans ce cas, la répartition des particules P est aléatoire sur la surface du tampon de brassage, et ces positions initiales aléatoires sont transférées à la surface du masque de gravure 300 lors de la mise en contact. Ces positions initiales sont ensuite modifiées telle que décrit précédemment, lors de la mise en mouvement du tampon de brassage au contact de la face exposée du masque de gravure 300.

Selon un exemple, le déplacement relatif du tampon 3 de brassage par rapport à la face exposée est défini par les paramètres des rotations R1 et/ou R2 et de la ou des translations T (vitesses, trajectoires, accélérations, décélérations etc). Selon un mode de réalisation optionnel ce déplacement est au moins en partie aléatoire. Par exemple la vitesse du déplacement, l'accélération ou la décélération, en rotation et/ou en translation, varient de manière aléatoire. De manière alternative ou combinée, la trajectoire du déplacement est aléatoire.

Selon un exemple, le déplacement relatif du tampon de brassage par rapport à la face exposée comprend une rotation autour d'un axe de rotation qui se déplace dans un plan qui lui est perpendiculaire. Selon un mode de réalisation optionnel ce déplacement de l'axe de rotation est aléatoire.

Ce caractère aléatoire du déplacement renforce encore le caractère aléatoire de la répartition des vias inactivés.

Comme illustré à la figure 7, en pratique, le dépôt et le brassage des particules P à la surface du masque de gravure 300 peut avantageusement se faire par un procédé de polissage mécano-chimique CMP. Classiquement, dans un procédé CMP, la plaque, c'est-à-dire le substrat 100 portant le niveau d'interconnexions 10 A, est maintenue en face arrière par une tête de polissage 2, du côté opposé à la face exposée du masque de gravure 300, et les particules P sont dispersées sur un tampon 3 de polissage faisant face à la tête de polissage 2. Le tampon 3 est porté par un bâti 1 d'entraînement en rotation. La tête de polissage 2 portant la plaque 10 est ensuite mise en contact avec le tampon 3 de polissage avec une certaine force d'appui, et la tête de polissage 2 et le tampon 3 de polissage sont animées par des mouvements de rotation/translation relatifs R1, R2, T. Dans le cadre de la présente invention, le tampon de polissage de l'équipement CMP correspond avantageusement au tampon de brassage mis en oeuvre dans le procédé selon l'invention.

Un tel procédé CMP habituellement configuré pour planariser une surface en retirant de la matière peut être configuré de façon à limiter ou éviter le retrait de matière du masque de gravure 300. En particulier, des paramètres tels que la force d'appui du tampon de polissage ou de brassage, la vitesse de rotation du tampon de brassage, le mouvement relatif du tampon de brassage vis-à-vis de la face exposée du masque de gravure 300, la durée d'application du tampon de brassage, la nature des particules P, peuvent être choisis de façon à éviter une réduction significative d'épaisseur du masque de gravure 300. Selon un exemple, à l'issue de cette étape CMP, le masque de gravure 300 peut présenter une épaisseur e' ≥ 0,9.e, voire e' ≥ 0,95.e, voire e' ≥ 0,98.e. Dans un procédé CMP classique, une étape de nettoyage est réalisée après application du tampon de brassage afin de retirer le maximum de particules. Dans le procédé selon l'invention, ce procédé CMP n'est pas finalisé, en particulier l'étape de nettoyage final n'est pas réalisée et les particules P ne sont pas retirées en totalité à l'issue du brassage.

Selon une possibilité préférée, le procédé selon l'invention utilise donc avantageusement un procédé CMP incomplet ou dégradé pour déposer et répartir les particules P sur la face exposée du masque de gravure 300 et dans les ouvertures 301_{F}. Comme les procédés CMP sont très classiques et parfaitement connus dans les technologies de la micro-électronique, le recours à un tel procédé CMP de façon détournée par le procédé selon l'invention permet une mise en oeuvre du procédé selon l'invention à un coût réduit. Les coûts de mise au point ou de développement sont ainsi réduits ou inexistants. La mise en oeuvre du procédé selon l'invention bénéficie également de la fiabilité des procédés CMP existants. Le procédé selon l'invention permet ainsi de répartir des particules P dans et en dehors des ouvertures 301, 301_{F} de façon fiable et parfaitement aléatoire.

Selon une possibilité, les particules P sont des billes d'oxyde de silicium, également dénommées billes de slurry, couramment utilisées dans les procédés CMP classiques. Ces billes de slurry sont sensiblement sphériques et présentent généralement une taille ou un diamètre bien calibré. De façon préférée, la taille ou le diamètre des particules P est supérieure ou égale au diamètre des ouvertures 301. Cela permet de boucher complètement une ouverture 301_{F}. Par la suite, cette ouverture 301_{F} complètement bouchée va donner lieu à un via inactif plutôt qu'à un via dégradé. Cela évite de mettre en oeuvre une étape d'inactivation des vias dégradés. Selon un exemple, les billes de slurry présentent un diamètre de l'ordre du diamètre des ouvertures 301, par exemple de l'ordre de 100 nm.

D'autres particules P de tailles et de formes variées sont envisageables. Des particules organométalliques ou organo-minérales peuvent également être envisagées.

A l'issue du dépôt et du brassage aléatoire des particules P à la surface du masque de gravure 300, le masque de gravure 300 comprend des ouvertures de masque 301 débouchantes totalement ouvertes, des ouvertures de masque 301_{F} partiellement bouchées et des ouvertures de masque 301_{F} totalement bouchées.

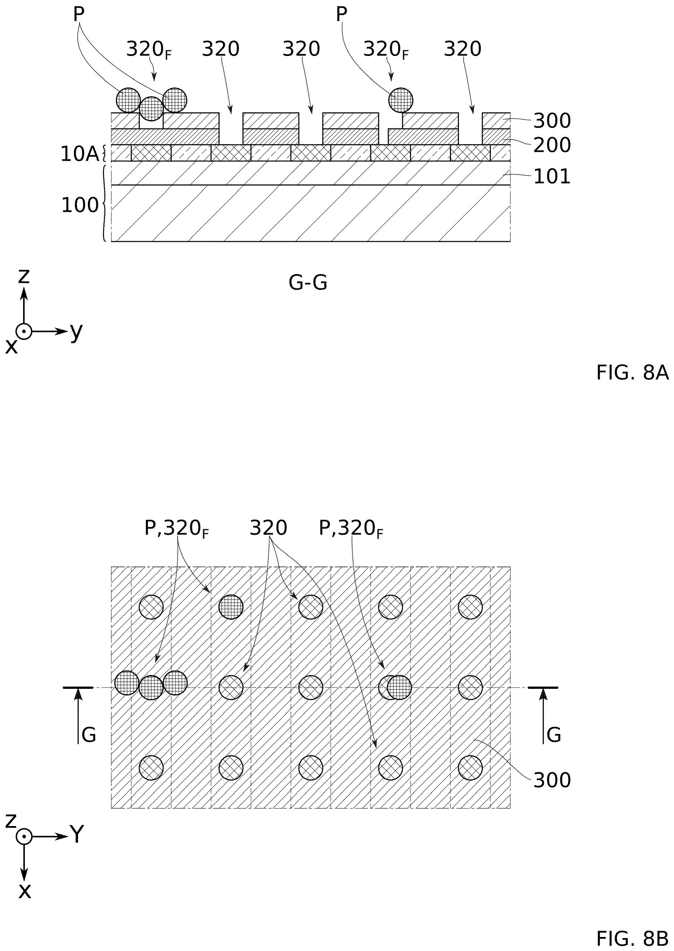

Comme illustré aux figures 8A, 8B, la couche diélectrique 200 est ensuite gravée au travers des ouvertures 301 totalement ouvertes et éventuellement des ouvertures 301_{F} partiellement bouchées du masque de gravure 300. Cette gravure peut être effectuée par voie sèche, typiquement par plasma. Le type de gravure et la nature des particules P peuvent être choisis de façon à ce que les particules P ne soient pas totalement gravées lors de la gravure de la couche diélectrique 200. En particulier, la sélectivité de gravure S_{P:HM} entre les particules P et le masque de gravure 300 peut être de l'ordre ou inférieur à 1:1. Les particules P sont ainsi gravées sensiblement à la même vitesse que le masque de gravure 300, voire plus lentement que le masque de gravure 300.

Après gravure, on obtient ainsi des ouvertures de via 320 fonctionnelles et des ouvertures de via 320_{F} dysfonctionnelles. Les ouvertures de via 320_{F} dysfonctionnelles peuvent être non gravées ou partiellement gravées. La distribution des ouvertures de via 320_{F} dysfonctionnelles reflète, par l'intermédiaire des ouvertures de masque 301_{F} bouchées, la position des particules P et est donc totalement aléatoire.

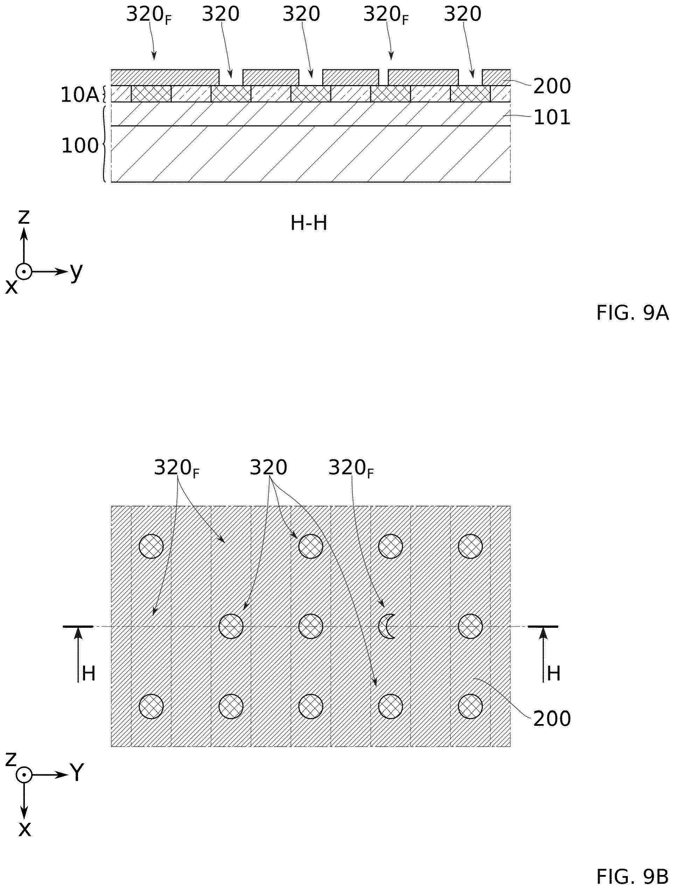

Comme illustré aux figures 9A, 9B, de façon optionnelle, après gravure de la couche diélectrique 200 au niveau des ouvertures de masque 301, 301_{F}, le masque de gravure 300 peut être avantageusement retiré sélectivement par rapport à la couche diélectrique 200.

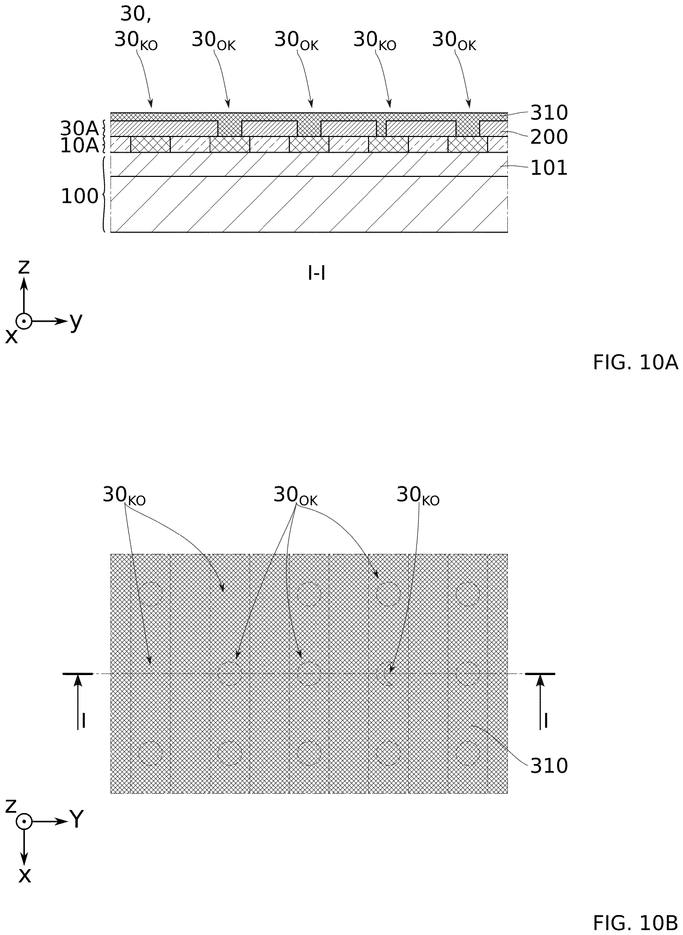

Comme illustré aux figures 10A, 10B, les ouvertures 320, 320_{F} sont ensuite remplies par un matériau conducteur 310, de façon à former respectivement des vias fonctionnels 30_{OK} et des vias dysfonctionnels 30_{KO}. Les vias fonctionnels 30_{OK} et les vias dysfonctionnels 30_{KO} forment le niveau d'interconnexions 30A. Le matériau conducteur est de préférence du cuivre. Les procédés de dépôt de cuivre, par exemple un remplissage électrolytique ECD (acronyme de « Electro Chemical Déposition »), sont bien connus de l'homme du métier.

Les vias fonctionnels 30_{OK} présentent typiquement une conductivité nominale lors d'un test électrique dédié. Les vias dysfonctionnels 30_{KO} présentent typiquement une conductivité inférieure à la conductivité nominale, voire une conductivité nulle, lors de ce test électrique. Un certain nombre de vias 30_{KO}, aléatoirement répartis, ne seront donc pas connectés ou seront mal connectés aux lignes 10.

Selon une possibilité, les vias dysfonctionnels 30_{KO} dégradés, c'est-à-dire formant une mauvaise connexion électrique avec les lignes 10, peuvent être ultérieurement désactivés, par exemple si la stabilité de leur connexion électrique n'est pas assez performante. Ils peuvent alternativement être utilisés en l'état, en tirant parti de leur résistance de connexion plus élevée (la surface de contact métallique étant plus faible que pour un via fonctionnel 30_{OK}). Cette résistance de connexion plus élevée induit notamment un temps de réponse différent de la circuiterie, par exemple lors du test électrique de la zone d'individualisation.

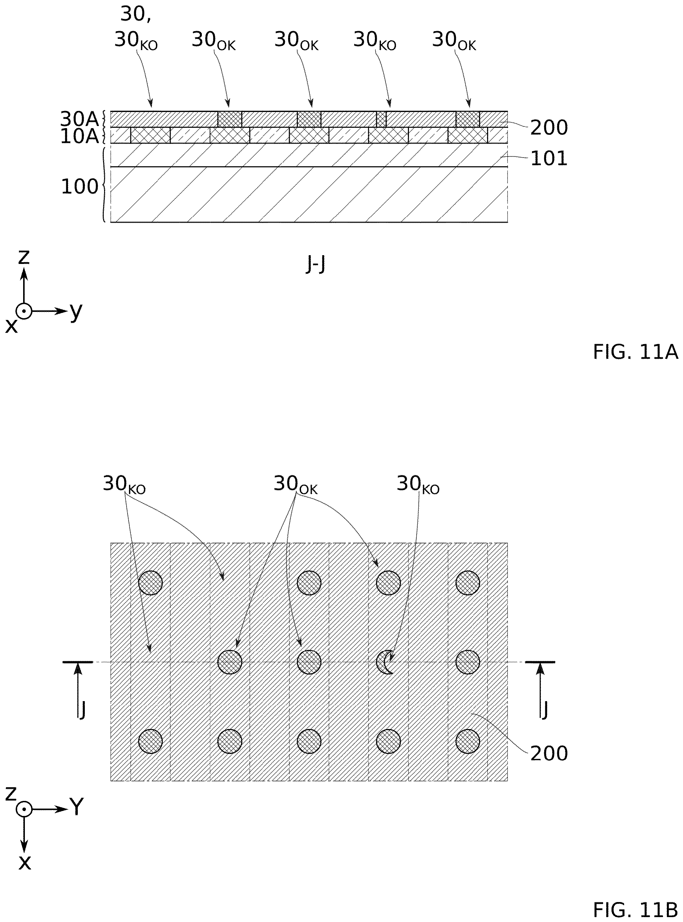

Comme illustré aux figures 11A, 11B, le cuivre déposé en excès peut être retiré, par exemple par polissage mécano-chimique CMP. Une surface plane en face supérieure du niveau d'interconnexions 30A est ainsi obtenue.

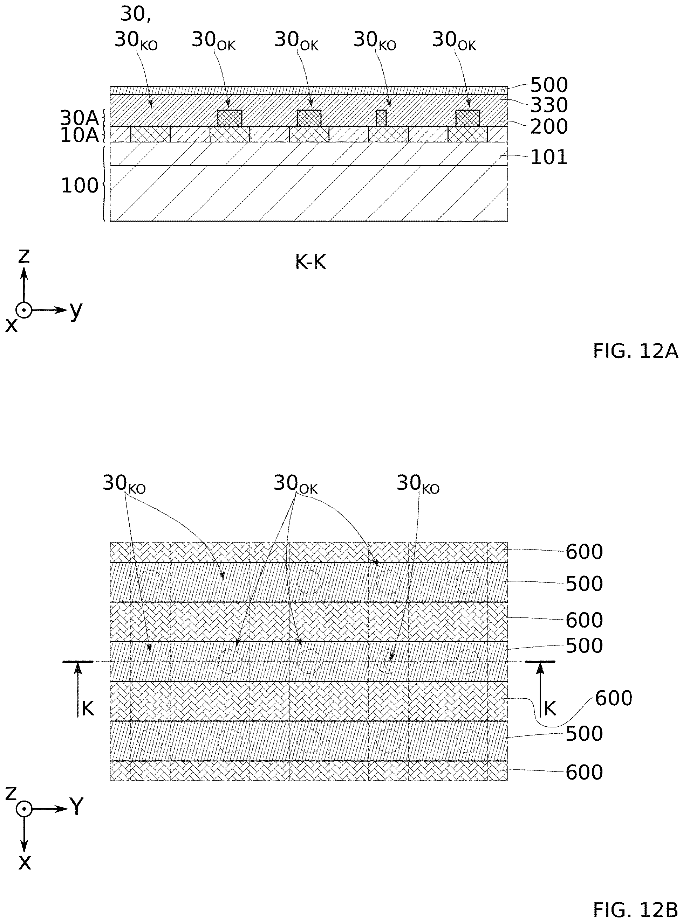

Comme illustré aux figures 12A, 12B, un nouvel empilement d'une couche diélectrique 330 et d'un masque de gravure 500 est formé sur la face supérieure du niveau d'interconnexions 30A, en prévision de la formation du deuxième niveau de pistes 20A. Un masque résine 600 est formé par lithographie sur cet empilement de façon à définir les pistes du deuxième niveau.

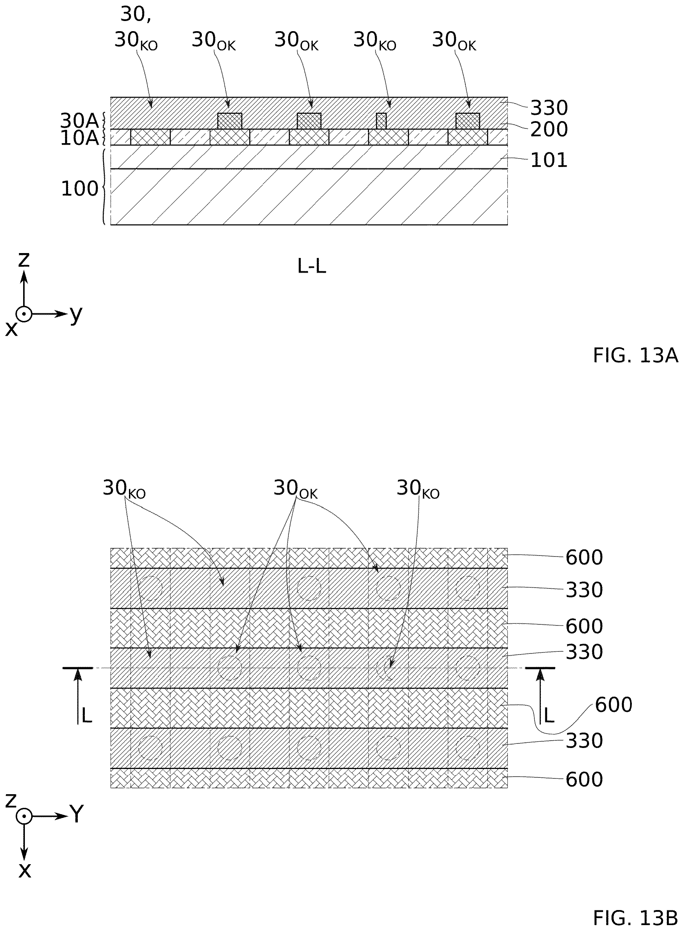

Comme illustré aux figures 13A, 13B, le masque de gravure 500 est gravé au travers du masque résine 600. Les motifs de pistes du masque 600 sont ainsi transférés dans le masque de gravure 500. Le masque résine 600 peut ensuite être retiré, par exemple par stripping.

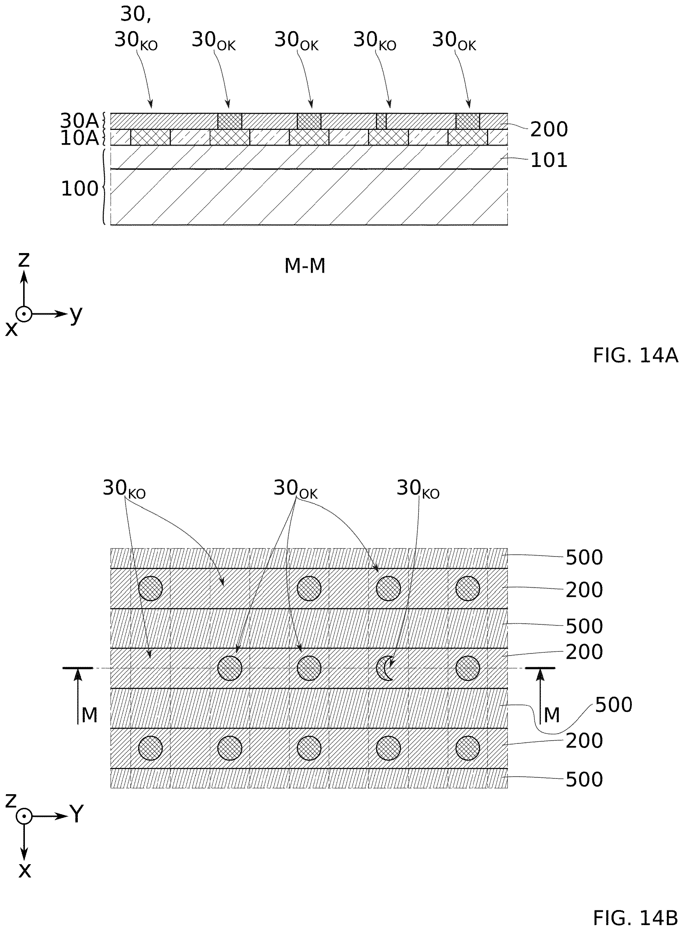

Comme illustré aux figures 14A, 14B, la couche diélectrique 330 est gravée au travers du masque de gravure 500. Cette gravure peut être effectuée de façon standard, typiquement par gravure sèche. Les motifs de pistes sont ainsi transférés dans la couche diélectrique 330.

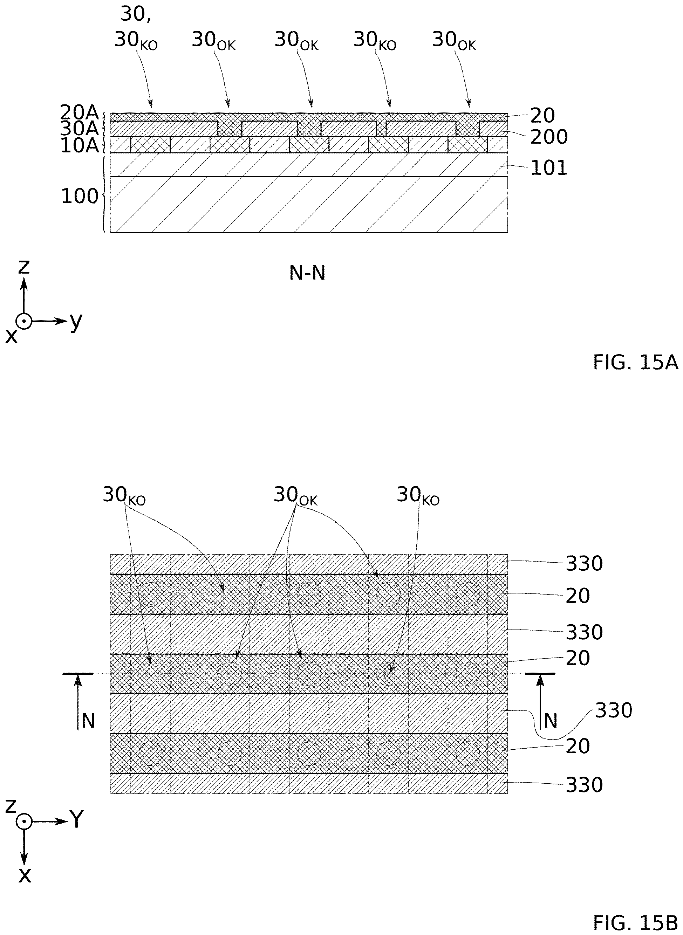

Comme illustré aux figures 15A, 15B, un dépôt de cuivre est effectué comme précédemment, de façon à remplir les motifs de pistes. Les pistes 20 du deuxième niveau de piste 20A sont ainsi formées. Une planarisation par CMP est ensuite effectuée, de façon à obtenir une surface plane en face supérieure du deuxième niveau de piste 20A.

D'autres niveaux de pistes et d'interconnexions peuvent être réalisés au-dessus des niveaux 10A, 30A, 20A.

Un réseau de vias 30 aléatoirement connectés est ainsi obtenu, avec des vias fonctionnels totalement connectés 30_{OK} et des vias dysfonctionnels 30_{KO} qui ne sont pas connectés ou qui sont partiellement connectés. La position des différents vias 30_{OK}, 30_{KO} et leur nombre varie d'une zone PUF à une autre zone PUF, d'une puce microélectronique à une autre puce microélectronique.

Au vu de la description qui précède, il apparaît clairement que le procédé proposé offre une solution particulièrement efficace pour réaliser une zone d'individualisation de type PUF.

L'invention n'est pas limitée aux modes de réalisations précédemment décrits. Le mode de réalisation décrit ci-dessus s'intègre dans la fabrication de composés semiconducteur au niveau du back end dit « cuivre ». L'invention s'étend néanmoins à des modes de réalisation utilisant un autre matériau conducteur que le cuivre. Pour cela, l'homme du métier saura sans difficulté effectuer les adaptations nécessaires en termes de choix de matériaux et d'étapes de procédé.

## Revendications

1. Procédé de réalisation d'une zone d'individualisation (1) d'une puce microélectronique, ladite puce comprenant au moins :
• un premier (10A) et un deuxième (20A) niveaux de pistes électriques (10, 20),
• un niveau (30A) d'interconnexions situées entre les premiers (10A) et deuxième (20A) niveaux de pistes électriques (10, 20) et comportant des vias (30) destinés à connecter électriquement des pistes électriques (10) du premier niveau (10A) avec des pistes électriques (20) du deuxième niveau (20A),
la puce présentant au moins une autre zone, distincte de la zone d'individualisation, destinée à former une zone fonctionnelle de la puce,
le procédé comprenant au moins les étapes suivantes effectuées au niveau de la zone d'individualisation (1) de la puce :
• fournir au moins le premier niveau (10A) de pistes électriques (10),
• former au moins une couche diélectrique (200) sur le premier niveau (10A),
• former sur l'au moins une couche diélectrique (200) un masque de gravure (300) présentant des ouvertures de masque (301), les ouvertures (301) étant situées au moins en partie au droit des pistes électriques (10) et rendant accessible l'au moins une couche diélectrique (200),
• déposer aléatoirement des particules (P) sur une face exposée du masque de gravure (300), puis
• appliquer un tampon de brassage sur ladite face exposée pour que le tampon de brassage déplace les particules (P) sur la face exposée de sorte à ce que certaines particules (P) bouchent au moins partiellement certaines des ouvertures de masque (301_{F}), dites ouvertures bouchées, en laissant d'autres ouvertures de masque (301) sans particules (P), dites ouvertures débouchantes,
• graver l'au moins une couche diélectrique (200) au travers des ouvertures de masque (301, 301_{F}), de façon à former des ouvertures de vias (320, 320_{F}) débouchant sur le premier niveau (10A) des pistes électriques (10), comprenant des ouvertures de vias fonctionnelles (320) au droit des ouvertures de masque (301) débouchantes, et des ouvertures de vias dégradées (320_{F}) au droit des ouvertures de masque (301_{F}) bouchées,
• remplir les ouvertures de vias (320, 320_{F}) avec un matériau électriquement conducteur de sorte à former au moins les vias (30) du niveau (30A) d'interconnexions, lesdits vias (30) comprenant des vias fonctionnels (30_{OK}) au niveau des ouvertures de vias fonctionnelles (320) et des vias dysfonctionnels (30_{KO}) au niveau des ouvertures de vias dégradées (320_{F}),
ledit procédé comprenant en outre, préalablement au dépôt des particules dans la zone d'individualisation (1), une formation d'un masque de protection sur la zone destinée à former la zone fonctionnelle de la puce.

2. Procédé selon la revendication précédente dans lequel le dépôt aléatoire des particules (P) se fait par dispersion d'une solution contenant lesdites particules (P) en suspension.

3. Procédé selon l'une quelconque des revendications précédentes dans lequel l'application du tampon de brassage sur la face exposée comprend au moins un mouvement de rotation relatif dudit tampon par rapport à la face exposée autour d'un axe normal à la face exposée du masque de gravure (300).

4. Procédé selon l'une quelconque des revendications précédentes dans lequel l'application du tampon de brassage sur la face exposée comprend au moins un mouvement de translation relatif dudit tampon par rapport à la face exposée du masque de gravure (300).

5. Procédé selon l'une quelconque des revendications précédentes dans lequel l'application du tampon de brassage sur la face exposée comprend, de préférence simultanément, au moins un mouvement de rotation relatif dudit tampon par rapport à la face exposée autour d'un axe normal à la face exposée du masque de gravure (300) et au moins une translation dudit axe de rotation dans un plan parallèle à la face exposée du masque de gravure (300).

6. Procédé selon l'une quelconque des revendications précédentes dans lequel ledit mouvement est en partie au moins aléatoire.

7. Procédé selon l'une quelconque des revendications précédentes dans lequel le dépôt aléatoire des particules (P) suivi par l'application du tampon de brassage correspond à une étape d'un procédé de polissage mécano-chimique.

8. Procédé selon la revendication précédente dans lequel le masque de gravure (300) présente une épaisseur initiale e, avant l'étape de polissage mécano-chimique, et dans lequel l'étape de polissage mécano-chimique est configurée de façon à ce que le masque de gravure (300) présente, après ladite étape de polissage mécano-chimique, une épaisseur finale e', telle que e' ≥ 0,9.e, de préférence e' ≥ 0,95.e et de préférence e' ≥ 0,98.e.

9. Procédé selon l'une quelconque des revendications précédentes dans lequel les particules (P) présentent chacune au moins une dimension supérieure ou égale à un diamètre des ouvertures de masque (301).

10. Procédé selon l'une quelconque des revendications précédentes dans lequel les particules (P) sont des billes ou des rouleaux.

11. Procédé selon l'une quelconque des revendications précédentes dans lequel les particules (P) sont minérales, de préférence à base d'oxyde de silicium.

12. Procédé selon l'une quelconque des revendications précédentes dans lequel la gravure de l'au moins une couche diélectrique (200) se fait par gravure sèche anisotrope, selon une direction (z) normale à la face exposée.

13. Procédé selon l'une quelconque des revendications précédentes dans lequel les particules (P) présentent une sélectivité de gravure S_{P:HM} vis-à-vis du masque de gravure (300), lors de la gravure de l'au moins une couche diélectrique (200), inférieure ou égale à 1:1.

14. Procédé de réalisation d'un dispositif microélectronique comportant au moins un circuit intégré, le circuit intégré comportant au moins :
• un premier (10A) et un deuxième (20A) niveaux des pistes électriques (10, 20),
• un niveau (30A) d'interconnexions situé entre les premiers (10A) et deuxième (20A) niveaux des pistes électriques et comportant des via (30) destinées à connecter électriquement des pistes (10) du premier niveau (10A) avec des pistes (20) du deuxième niveau (20A),
• une zone d'individualisation (1) réalisée en mettant en oeuvre le procédé selon l'une quelconque des revendications précédentes sur une partie seulement du circuit intégré.
